# EUROPÄISCHE PATENTANMELDUNG

(11) **EP 0 584 548 A2**
(43) Veröffentlichungstag der Anmeldung: **02.03.1994**
(21) Anmeldenummer: 93111879.8
(22) Anmeldetag: 23.07.1993
(51) Int. Cl.: H04Q 3/00

(54) **Digitales Kommunikationsnetz**

(30) Priorität: 30.07.1992 DE 4225203
(71) Anmelder: SIEMENS AKTIENGESELLSCHAFT, D-80333 München (DE)
(72) Erfinder: Müller, Henrik, Dipl.-Ing., D-81249 München (DE)

(57) **Zusammenfassung**

In einem digitalen Kommunikationsnetz umfaßt die Kommunikation zwischen Teilnehmern den Austausch von Signalisierungsinformationen und Nutzinformationen und der Weg eines Teils der Signalisierungsinformationen durch das Kommunikationsnetz ist unabhängig vom Weg der Nutzinformation. Dadurch ist es inbesondere möglich, daß bei Überlastung des Netzes die Nutzinformationen über ein angeschlossenes öffentliches Kommunikationsnetz geführt werden, während die Signalisierungsinformationen weiterhin über das digitale Kommunikationsnetz übermittelt werden. Das erfindungsgemäße digitale Kommunikationsnetz ermöglicht eine hohe Auslastung und damit eine vorteilhafte Dimensionierung.

## Beschreibung

Die Erfindung betrifft ein digitales Kommunikationsnetz, bei dem die Kommunikation Zwischen Teilnehmern den Austausch von Signalisierungsinformation und Nutzinformation umfaßt.

Der Aufbau von digitalen Kommunikationsnetzen, wie sie beispielsweise in Bergmann; Lehrbuch der Fernmeldetechnik ISBN 3-7949-0405-2; Berlin 1986; Seiten 203-246 beschrieben sind, erfordert hohe Investitionen und Aufwände. Es ist daher notwendig, diese hohen Aufwände durch eine möglichst gleichmäßig hohe Auslastung des Kommunikationsnetzes zu rechtfertigen. Dies wird bislang dadurch erreicht, daß das Kommunikationsnetz bei Belastungsspitzen einfach überlastet ist, das heißt die Teilnehmer müssen im Überlastfall abwarten und den Anruf entsprechend oft wiederholen. Diese Art des Belastungsausgleichs ist mit einem erhöhten Aufwand für den Teilnehmer verbunden und widerspricht der Forderung nach Komfort, die an ein Kommunikationsnetz zu stellen ist, um eine hohe Akzeptanz der Teilnehmer zu erreichen.

Der Erfindung liegt die Aufgabe Zugrunde, die Auslastungsmöglichkeit eines digitalen Kommunikationsnetzes zu verbessern. Die Aufgabe wird ausgehend von einem digitalen Kommunikationsnetz gemäß Oberbegriff des Anspruchs 1 durch dessen kennzeichnende Merkmale gelöst.

Durch die Trennung der Wege der Signalisierungsinformation und der Nutzinformation wird die Verbindungsaufnahme in das Kommunikationsnetz erleichtert und dadurch die Wirtschaftlichkeit für den Netzverteiler und der Komfort für den Netzbenutzer erhöht.

Vorteilhaft ist auch eine Ausgestaltung der Erfindung gemäß Anspruch 2. Die Signalisierungsinformation, beispielsweise kurze Meldetexte, weist im allgemeinen gegenüber der Nutzinformation eine relativ geringe Datenmenge auf. Daher ist eine Signalisierung über die kürzest mögliche Verbindung durch das Kommunikationsnetz meist auch bei einer vollständigen Belegung der Nutzkanäle möglich. Durch die Wahl dieser kürzesten Verbindung wird der Vermittlungsaufwand auf ein Minimum beschränkt.

Vorteilhaft ist weiterhin eine Ausgestaltung der Erfindung gemäß der Ansprüche 3 und 4. Dadurch ist es auch bei Überlastung des Kommunikationsnetzes möglich, insbesondere über ein angeschlossenes öffentliches Netz, eine Verbindung aufzubauen. Durch die Trennung der Wege von Nutzinformation und Signalisierungsinformation kann der volle Leistungsumfang des digitalen Kommunikationsnetzes aufrecht erhalten werden. Meist weisen öffentliche Netze nicht alle Leistungsmerkmale eines privaten Kommunikationsnetzes auf. Diese Leistungsmerkmale betreffen in erster Linie zusätzliche Signalisierungsinformationen, wie beispielsweise Meldetexte, die erfindungsgemäß durch das digitale Kommunikationsnetz übertragen werden, während die Nutzinformationen über ein öffentliches Netz geführt werden.

Vorteilhaft ist schließlich auch ein Verfahren zur Durchführung eines Verbindungsaufbaues in einem digitalen Kommunikationsnetz gemäß Anspruch 5. Mit diesem Verfahren wird die Vermittlungskapazität eines Netzes noch weiter erhöht. Hierbei wird während der Signalisierung geprüft, ob der Weg vom letzten Verbindungsknoten zum Zielteilnehmer, für den es keine Umgehungsmöglichkeiten gibt, frei ist. Erst wenn dieser Weg frei ist, erfolgt der weitere Verbindungsaufbau. Im anderen Fall wird sofort ein Besetztzeichen generiert und das Kommunikationsnetz nicht mit weiterem Verbindungsaufbauversuchen belastet.

Die Erfindung wird anhand einer Figur näher erläutert, welche ein Beispiel eines erfindungsgemäßen digitalen Kommunikationsnetzes zeigt.

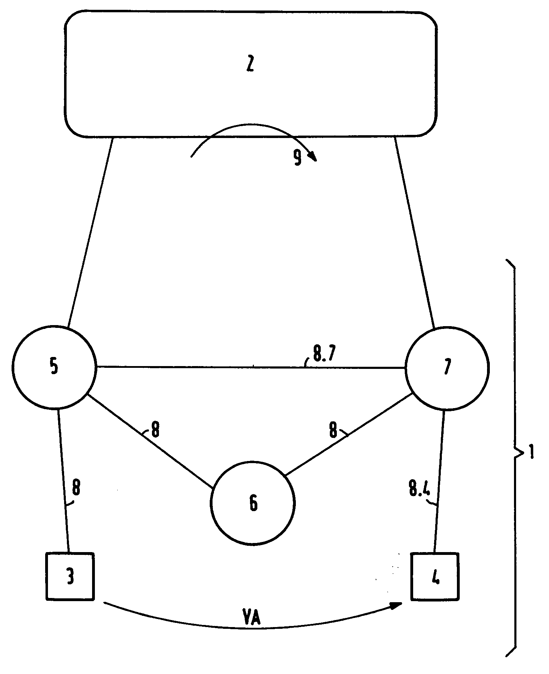

Die Figur umfaßt ein privates Kommunikationsnetz 1, mit einem Ursprungsteilnehmeranschluß 3, einem Zielteilnehmeranschluß 4, einem ersten, zweiten und dritten Netzknoten 5, 7, 6 und zwischen den Netzknoten 5, 7, 6, bzw. den Netzknoten 5, 7, 6 und den Teilnehmeranschlüssen 3, 4 verlaufende Leitungen 8 sowie ein öffentliches Kommunikationsnetz 2.

Ein Verbindungsaufbau VA zwischen dem Ursprungsteilnehmeranschluß 3 und dem Zielteilnehmeranschluß 4 verläuft wie folgt: Mittels Signalisierung wird über den direkten Weg zwischen den beiden Teilnehmern über den ersten Netzknoten 5 und den zweiten Netzknoten 7 geprüft, ob der Zielteilnehmeranschluß 4 frei ist und ein Weg vom zweiten Netzknoten 7 zum Zielteilnehmeranschluß 4 frei ist. Da die Verbindung 8.4 vom zweiten Netzknoten 7 zum Zielteilnehmeranschluß 4 die Engstelle der Verbindung darstellt, ist davon auszugehen, daß eine Verbindung zustande kommt, wenn diese Verbindung 8.4 frei ist.

Ist die Verbindung 8.4 jedoch besetzt, kann beispielsweise mittels Signalisierung eine Rückrufaufforderung beim Zielanschlußteilnehmer 4 hinterlegt werden. Der Anrufer hört das Besetztzeichen in seinem Apparat.

Ist die Verbindung 8.4 vom zweiten Netzknoten 7 zum Zielteilnehmeranschluß 4 jedoch frei, so wird zusätzlich zur Signalisierungsinformation auch ein Weg für die Nutzinformation, das heißt im Normalfall eine Sprachverbindung aufgebaut. Entweder über die direkte Verbindung 8.7, den ersten Netzknoten 5 und den zweiten Netzknoten 7 oder, wenn auf diesem Weg kein Nutzkanal mehr frei ist, über den dritten Netzknoten 6, oder wenn auch über diesen keine freie Verbindung möglich ist, dann über das öffentliche Kommunikationsnetz 2. Dabei wird jedoch ein Teil der Signalisierung über den direkten Weg zwischen Ursprungsteilnehmeranschluß 3 und Zielteilnehmeranschluß 4 aufrecht erhalten. Dies ist bei einer Verbindung 9 über das öffentliche Kommunikationsnetz 2 dann insbesondere von Bedeutung, wenn dieses öffentliche Kommunikationsnetz 2 nicht alle Leistungsmerkmale des privaten Kommunikationsnetzes 1 aufweist. Solche Leistungsmerkmale werden über die direkte Signalisierungsverbindung zwischen den beiden Teilnehmern 3, 4 geführt. Beispiele für derartige Leistungsmerkmale sind:
Rückruf bei "Nicht - Melden",
einschalten/löschen von Signallampen;
Anzeige des Namens des Rufenden beim Gerufenen und umgekehrt,
Rufumleitung und Rufweiterschaltung mit Namensanzeige.

Bei getrennten Wegen von Signalisierungsinformation und Nutzinformation werden die beiden Informationen im Zielknoten 7 wieder zusammengeführt. Dies wird durch Vergleich der in den Signalisierungsmeldungen enthaltenen und auf beiden Wegen identischen Ursprungs- und Zielanschlußnummern bewirkt.

## Patentansprüche

1. Digitales Kommunikationsnetz (1), bei dem die Kommunikation zwischen Teilnehmern den Austausch von Signalisierungsinformation und Nutzinformation umfaßt,
**dadurch gekennzeichnet,**
daß der Weg eines Teiles der Signalisierungsinformation durch das Kommunikationsnetz unabhängig vom Weg der Nutzinformation ist.

2. Digitales Kommunikationsnetz (1) nach Anspruch 1,
**dadurch gekennzeichnet,**
daß der vom Weg der Nutzinformation unabhängige Weg eines Teiles der Signalisierungsinformation zwischen zwei Teilnehmeranschlüssen (3, 4) der kürzesten möglichen Verbindungsweg (8.7) durch das Kommunikationsnetz (1) entspricht.

3. Digitales Kommunikationsnetz (1) nach Anspruch 1 oder 2,
**dadurch gekennzeichnet,**
daß der Weg der Nutzinformation teilweise über ein weiteres Kommunikationsnetz (2) führt.

4. Digitales Kommunikationsnetz (1) nach Anspruch 3,
**dadurch gekennzeichnet,**
daß das digitale Kommunikationsnetz (1) ein privates Netz ist und das weitere Kommunikationsnetz (2) ein öffentliches Netz ist.

5. Verfahren zur Durchführung eines Verbindungsaufbaues in einem digitalen Kommunikationsnetz nach einem der Ansprüche 1 bis 4,
**dadurch gekennzeichnet,**
daß bei einer Kommunikation zwischen zwei Teilnehmeranschlüssen (3, 4) zuerst die Signalisierungsverbindung hergestellt wird, anschließend geprüft wird, ob der Zielteilnehmeranschluß (4) frei ist, im Freifall geprüft wird, ob der Weg vom letzten Verbindungsknoten (7) zum Zielteilnehmeranschluß (4) frei ist, sowie im Freifall ein möglicher Weg für die Nutzinformation ermittelt und zuletzt die Verbindung hergestellt wird.
